# EUROPÄISCHE PATENTSCHRIFT

(11) **EP 3 961 019 B1**
(45) Veröffentlichungstag und Bekanntmachung des Hinweises auf die Patenterteilung: **09.08.2023**
(21) Anmeldenummer: 21182856.1
(22) Anmeldetag: 30.06.2021
(51) Int. Cl.: F02D 41/14, F02D 41/22, G05B 23/02

(54) **VERFAHREN ZUR DYNAMIKDIAGNOSE EINES SENSORS IM FRISCHLUFT- ODER ABGASTRAKT VON BRENNKRAFTMASCHINEN**
METHOD FOR THE DYNAMIC DIAGNOSIS OF A SENSOR IN THE FRESH AIR OR EXHAUST GAS LINE OF COMBUSTION ENGINES
PROCÉDÉ DE DIAGNOSTIC DYNAMIQUE D'UN CAPTEUR DANS LE CIRCUIT D'AIR FRAIS OU DE GAZ D'ÉCHAPPEMENT DES MACHINES À COMBUSTION INTERNE

(30) Priorität: 28.08.2020 DE 102020210878
(43) Veröffentlichungstag der Anmeldung: 02.03.2022
(73) Patentinhaber: Volkswagen Aktiengesellschaft, 38440 Wolfsburg (DE)
(72) Erfinder: Forst, Johannes, 30455 Hannover (DE); Mazur, Michael, 30519 Hannover (DE); Berski, Fabian, 30163 Hannover (DE)

(56) Entgegenhaltungen:
- WO-A1-2018/220045
- DE-A1-102009 027 400
- DE-A1-102017 215 849

## Beschreibung

Die Erfindung betrifft ein Verfahren zur Dynamikdiagnose eines Sensors im Frischluft- oder Abgastrakt von Brennkraftmaschinen sowie ein Computerprogramm, ein Computerprogrammprodukt und ein entsprechendes Fahrzeug.

Neue Verfahren, insbesondere die Nockenwellen-Adaption über Druckpulsationen, benötigen sehr dynamische Sensoren. Verringert sich die Dynamik von Sensoren, verlieren diese neuen Verfahren ihre geforderte Genauigkeit. Beispielsweise können Sensoren aufgrund von Alterungsvorgängen oder Verstopfungsvorgängen ihre Dynamik zumindest teilweise verlieren. Hierfür können auch allgemein jegliche Defekte oder Produktionsfehler verantwortlich sein. Zwar messen solche Sensoren in diesen besonderen Zuständen noch Messwerte. Inwiefern hier die geforderte Genauigkeit und vor allem Richtigkeit eingehalten wird, ist nicht ohne weiteres von einem Anwender oder von gekoppelten Geräten nachvollziehbar. Insbesondere jegliche erste Hinweise für solche besonderen Zustände werden häufig nicht bemerkt, sodass damit gekoppelte Verfahren nicht mehr zuverlässig und einwandfrei durchführbar sind.

Es sind bereits erste Verfahren bekannt, welche beispielsweise singulär einen Signal-Gradienten erfassen oder etwa einzelne FFT-Frequenzen beziehungsweise Ordnungen prüfen. Auch der Einsatz von Bandpassfiltern spielt hierbei eine Rolle. Als nachteilig kann dabei angesehen werden, dass dieses Vorgehen für die gewünschten Zwecke als zu ungenau angesehen werden kann. In diesem Zusammenhang werden zudem nur bestimmte Frequenzen berücksichtigt.

Somit bieten bisher bekannte Verfahren zur Diagnose eines Sensors auf seine dynamischen Eigenschaften keine ausreichende Trennschärfe zwischen einem dynamischen Sensor und einem Sensor mit verschlechterter Dynamik bei einem Einsatz in der Serie.

Aus dem Stand der Technik wird nachfolgend ein Beispiel näher vorgestellt.

So ist aus der Druckschrift DE 10 2013 207 202 A1 ein Verfahren zur Dynamikdiagnose von Abgassensoren als bekannt zu entnehmen. Insbesondere wird dabei ein Verfahren zur Dynamikdiagnose von Sensoren im Frischluft- oder Abgastrakt von Brennkraftmaschinen, die während ihres Betriebs insbesondere periodische Fluktuationen wenigstens einer Stoffgröße der der Brennkraftmaschine zugeführten Frischluft oder des Abgases im Abgastrakt hervorrufen, vorgestellt. Durch die periodischen Fluktuationen in vorgebbaren Betriebsbereichen der Brennkraftmaschine hervorgerufene Sensoranregungen und entsprechende Sensorreaktionen werden dabei mit zuvor für diese Betriebsbereiche erfassten und gespeicherten oder berechneten Anregungen der Stoffgröße und/oder gespeicherten oder berechneten zugehörigen Sensorreaktionen verglichen. Anschließend wird aus dem Vergleich auf wenigstens eine die Sensordynamik charakterisierende Größe des Sensors geschlossen.

Aus der DE 10 2009 027 400 A1 ist ein Verfahren zur Diagnose einer Sensoreinrichtung eines Verbrennungsmotors bekannt, bei welchem ein Ausgangssignal der Sensoreinrichtung mit einem unabhängig von dem Ausgangssignal vorgegebenen Sollwert verglichen wird. Dabei betrifft der Sollwert eine periodische Eigenschaft. Der Werteverlauf des Ausgangssignals der Sensoreinrichtung oder eine aus dem Werteverlauf abgeleitete Größe wird im Hinblick auf diese periodische Eigenschaft analysiert.

Die DE 10 2017 215 849 A1 offenbart ein Verfahren zur Überprüfung der Funktion eines Drucksensors in einem Ansaugtrakt einer Abgasanlage eines Verbrennungsmotors. Die DE 10 2017 215 849 offenbart ferner eine Motorsteuerungseinheit zur Durchführung eines solchen Verfahrens. Das Verfahren basiert darauf, dass dynamische Druckschwingungen der Ansaugluft im Ansaugtrakt oder in der Abgasanlage des Verbrennungsmotors im Betrieb mittels des betreffenden Drucksensors gemessen werden und auf Basis des erhaltenen Druckschwingungssignals mit Hilfe Diskreter-Fourier-Transformation für mehrere ausgesuchten Signalfrequenzen jeweils ein Wert eines bestimmten Betriebscharakteristikums des Verbrennungsmotors sowie Abweichungswerte der für die unterschiedlichen Signalfrequenzen bestimmten Werte ermittelt werden. In Abhängigkeit davon, ob ermittelte Abweichungswerte einen vorgegebenen Grenzwert unter- oder überschreiten, wird die einwandfreie Funktion des Drucksensors bestätigt oder eine Fehlfunktion des Drucksensors diagnostiziert.

Der Erfindung liegt nun die Aufgabe zugrunde, ein Verfahren zur Dynamikdiagnose eines Sensors bereitzustellen, welches eine robuste und zuverlässige Analyse einer Funktionsfähigkeit eines zu diagnostizierenden Sensors gewährleistet.

In bevorzugter Ausgestaltung der Erfindung ist vorgesehen, dass ein Verfahren zur Dynamikdiagnose eines Sensors im Frischluft- oder Abgastrakt von Brennkraftmaschinen nach Anspruch 1 bereitgestellt wird.

Auf diese Weise ist es möglich, ein Verfahren zur Dynamikdiagnose eines Sensors bereitzustellen, welches eine robuste und zuverlässige Analyse einer Funktionsfähigkeit eines zu diagnostizierenden Sensors gewährleistet.

Dabei wird zur Analyse der Dynamik des Sensors das bei geeigneter Anregung aufgenommene Signal über einen gewissen Zeitrahmen in Millisekunden oder entsprechender Motordrehungen analysiert. Insbesondere erfolgt beispielsweise dabei die Analyse durch ein Verhältnis der Rauschleistung von Bereichen niedriger Frequenzen beziehungsweise Ordnungen zu der Rauschleistung von Bereichen hoher Frequenzen beziehungsweise Ordnungen.

Mit anderen Worten, werden Messwerte von sich unterscheidenden Frequenzbereichen aufgenommen, um basierend auf diesen sich unterscheidenden Messwerten eine Kennzahl zu bilden. Die Erfindung macht sich dabei die Tatsache zunutze, dass im Bereich niedriger Frequenzen eine Sensor-Leistungsdichte nicht durch eine bereits eingetretene verschlechterte Dynamik des Sensors beeinflusst wird, im Bereich von hohen Frequenzen jedoch schon. Somit wird basierend auf dieser Erkenntnis eine entsprechende Kennzahl gebildet, welche sich dann gegen einen benutzerdefiniert hinterlegten Schwellenwert vergleichen lässt und von der Anregung unabhängig ist. Ein Kennzeichen für eine sich verschlechternde Dynamik des Sensors kann beispielsweise darin bestehen, dass die Kennzahl kleiner als dieser Schwellenwert ist. Ansonsten kann die Dynamik des Sensors als ausreichend für damit verbundene Messverfahrend des Sensors angesehen werden. Die somit ermittelte Kennzahl berücksichtigt die unterschiedlichen Messbereiche des Sensors, sodass eine zuverlässige Analyse der Dynamik möglich ist, welche sich zudem als robuster erweist als bisherige Verfahren auf diesem Gebiet. Es ist somit möglich, eine gute Trennung zwischen einem Sensor, der in Ordnung ist, und einem Sensor, der nicht in Ordnung ist, vorzunehmen.

Das Auslösesignal ist beispielsweise ausgelegt, weitere Aktionen im Fahrzeug auszulösen. Auch kann mittels des zwischen der Kennzahl und der Schwelle möglicherweise ermittelten Deltas auf wenigstens einen Betriebszustand des Sensors geschlossen werden, wobei diese Informationen dann im Sinne einer Analyse verwendbar sind. Das Auslösesignal kann diese Informationen zusätzlich umfassen und einem Nutzer oder dem Fahrzeug oder jeglicher erweiterten Analyseperipherie, insbesondere einem angeschlossenen Analysegerät, bereitstellen, sodass eine beeinträchtigte Sensordynamik des Sensors angezeigt wird, wobei eine erweiterte Analyse breitgestellt wird.

In weiterer bevorzugter Ausgestaltung der Erfindung ist vorgesehen, dass ein Computerprogramm bereitgestellt wird, welches alle Schritte eines Verfahrens nach einem der Ansprüche 1 bis 10 ausführt, wobei das Computerprogramm auf einer Steuer- und Recheneinheit einer Brennkraftmaschine eines Fahrzeugs abläuft. Die zuvor genannten Vorteile gelten soweit übertragbar auch für das vorgestellte Computerprogramm.

In weiterer bevorzugter Ausgestaltung der Erfindung ist vorgesehen, dass ein Computerprogrammprodukt mit Programmcode bereitgestellt wird, der auf einem maschinenlesbaren Träger gespeichert ist, zur Durchführung des Verfahrens nach einem der Ansprüche 1 bis 10, wenn das Programm auf einem Computer und/oder einem Steuergerät ausgeführt wird. Die zuvor genannten Vorteile gelten soweit übertragbar auch für das vorgestellte Computerprogrammprodukt mit Programmcode.

In weiterer bevorzugter Ausgestaltung der Erfindung ist vorgesehen, dass ein Fahrzeug bereitgestellt wird, welches ein Computerprogramm gemäß Anspruch und/oder ein Computerprogrammprodukt gemäß Anspruch 12 umfasst. Die zuvor genannten Vorteile gelten soweit übertragbar auch für das vorgestellte Fahrzeug.

Weitere bevorzugte Ausgestaltungen der Erfindung ergeben sich aus den übrigen, in den Unteransprüchen genannten Merkmalen.

So ist in einer weiteren bevorzugten Ausgestaltung der Erfindung vorgesehen, dass das wenigstens eine Auslösesignal insbesondere dann ausgelöst wird, wenn die berechnete Kennzahl kleiner als der Schwellenwert ist. Wird der Schwellenwert entsprechend sensibel ausgewählt, ist somit eine besonders feine Einteilung von zu analysierenden Sensoren hinsichtlich ihrer Dynamik möglich.

Auch ist in einer weiteren bevorzugten Ausgestaltung der Erfindung vorgesehen, dass die jeweiligen Messwerte über ein Zeitintervall von 2 bis 300 ms oder 15 bis 280 ms oder 30 bis 240 ms oder während mindestens einer f Motordrehung oder maximal zehn Motordrehungen erhoben werden.

Somit ist es möglich, eine jeweilige ausreichende Anzahl von Messwerten zu ermitteln, sodass die zuvor erläuterte robuste Analyse besonders zuverlässig durchführbar ist.

Ferner ist in einer weiteren bevorzugten Ausgestaltung der Erfindung vorgesehen, dass der Sensor ausgelegt ist, Messwerte im Bereich von 10 bis 6.000 Hertz zu erheben. Somit können in den jeweils relevanten Frequenzbereichen ausreichend beabstandete einzelne Messwerte im Sinne der oben erläuterten Idee erhoben werden, um somit eine zuverlässige und robuste Analyse noch besser zu ermöglichen.

Erfindungsgemäß ist vorgesehen, dass die Messwerte von sich unterscheidenden Frequenzbereichen sich jeweils wenigstens um den Faktor 5 unterscheiden. Die zuvor genannten Vorteile sind somit noch besser zu erreichen.

Ferner ist erfindungsgemäß vorgesehen, dass bei der Berechnung der Kennzahl Messwerte hoher Frequenzen, nämlich Messwerte im Messintervall zwischen 800 bis 6.000 Hertz, aufsummiert werden und anschließend mit wenigstens einem Messwert niedriger Frequenz, nämlich einem Messwert im Messintervall zwischen 50 bis 300 Hertz, normiert werden.

Beispielsweis werden die jeweiligen Messwerte im Zusammenhang mit den Drucksignalen bei den sich im laufenden Betrieb einstellenden Motordrehungen aufgenommen. Es werden die Amplituden beispielsweise für die 20ste bis 140ste Ordnung, abhängig vom Motorkonzept, bestimmt. Diese Amplituden werden entsprechend aufsummiert. Zudem wird beispielsweise die Amplitude der vierten Ordnung bestimmt, sodass die Summe der höheren Amplituden entsprechend zu dieser niedrigen Amplitude normiert werden können. Mit anderen Worten wird die Kennzahl dadurch berechnet, dass die Summe der höheren Amplituden durch die kleine Amplitude geteilt wird. Diese Kennzahl wird dann anschließend mit dem hinterlegten Schwellenwert verglichen. Dabei können beispielsweise drehzahlabhängige Schwellenwerte verwendet werden, sodass das Verfahren aufgrund der von einem Benutzer einstellbaren Schwellenwerte an dieser Stelle besonders anwenderfreundlich und flexibel einsetzbar ist. Wenn der Wert der Kennzahl beispielsweise kleiner als die Schwelle ist, ist der Sensor nicht in Ordnung und es wird demnach wenigstens ein Auslösesignal ausgelöst.

Des Weiteren ist in einer weiteren bevorzugten Ausgestaltung der Erfindung vorgesehen, dass die jeweiligen Messwerte vor der Berechnung der Kennzahl mittels einer FFT-Methodik in den Frequenzraum transformiert werden. Die zuvor genannten Vorteile sind somit noch besser zu erreichen.

Ferner ist in einer weiteren bevorzugten Ausgestaltung der Erfindung vorgesehen, dass die jeweiligen Messwerte vor der Berechnung der Kennzahl mittels einer FFT-Methodik, insbesondere mittels einer Goertzel-Methodik, in den Frequenzraum transformiert werden.

Die zuvor genannten Vorteile sind somit noch besser zu erreichen.

Auch ist in einer weiteren bevorzugten Ausgestaltung der Erfindung vorgesehen, dass der Sensor ausgelegt ist, in einem Nockenwellen-Adaptionsverfahren eingesetzt zu werden.

Für diese Anwendung ist das vorgestellte Verfahren besonders geeignet. Da eine Grundvoraussetzung bei dem Nockenwellen-Adaptionsverfahren in einer ausreichend zuverlässigen Dynamik der involvierten Sensoren besteht, ist das vorgestellte Verfahren besonders vorteilhaft in diesem Zusammenhang anzuwenden.

Zudem ist in einer weiteren bevorzugten Ausgestaltung der Erfindung vorgesehen, dass die Steuer- und Recheneinheit ausgelegt ist, zumindest teilweise Aufgaben einer Motorsteuerung auszuführen oder wobei die Steuer- und Recheneinheit mit einer Motorsteuerung des Fahrzeugs gekoppelt wird.

Somit kann die durchgeführte Analyse und die dabei erhaltenen Erkenntnisse aktiv für Prozesse der Motorsteuerung eingesetzt werden. Mit anderen Worten kann die Information über einen erkannten defekten Sensor unmittelbar für Korrektureingriffe in der Motorsteuerung verwendet werden.

Auch ist in einer weiteren bevorzugten Ausgestaltung der Erfindung vorgesehen, dass das Auslösesignal für weitere Berechnungs- und/oder Steuerungsvorgänge im Fahrzeug verwendet wird.

Somit kann die durchgeführte Analyse und die dabei erhaltenen Erkenntnisse aktiv für weitere Berechnungs- und/oder Steuerungsvorgänge im Fahrzeug eingesetzt werden. Mit anderen Worten kann die Information über einen erkannten defekten Sensor unmittelbar für Korrektureingriffe in dem Fahrzeug verwendet werden.

Schlussendlich ist in einer weiteren bevorzugten Ausgestaltung der Erfindung vorgesehen, dass das Auslösesignal in wenigstens einer Ausgabevorrichtung des Fahrzeugs angezeigt wird, insbesondere auf wenigstens einer Bildschirmvorrichtung des Fahrzeugs. Auf diese Weise wird ein Fahrer zuverlässig informiert, sodass dieser anschließend entsprechende Maßnahmen einleiten kann, um den erkannten defekten Sensor auszutauschen oder zu reparieren.

Die zuvor erläuterten Bestandteile der vorliegenden Erfindung sind beispielsweise in jeglichen Fahrzeugen mit Brennkraftmaschinen, insbesondere Ottomotoren, anwendbar, die einen hochdynamischen Sensor benötigen, um beispielsweise das Nockenwellen-Adaptionsverfahren zu verwenden.

Die Erfindung wird nachfolgend in Ausführungsbeispielen anhand der zugehörigen Zeichnungen erläutert. Es zeigen:
- Figur 1: ein Verfahrensablaufdiagramm von einem Verfahren zur Dynamikdiagnose eines Sensors im Frischluft- oder Abgastrakt von Brennkraftmaschinen;
- Figur 2: eine schematische Darstellung von einem Fahrzeug umfassend ein Computerprogramm gemäß Anspruch 13 und ein Computerprogrammprodukt gemäß Anspruch 14.

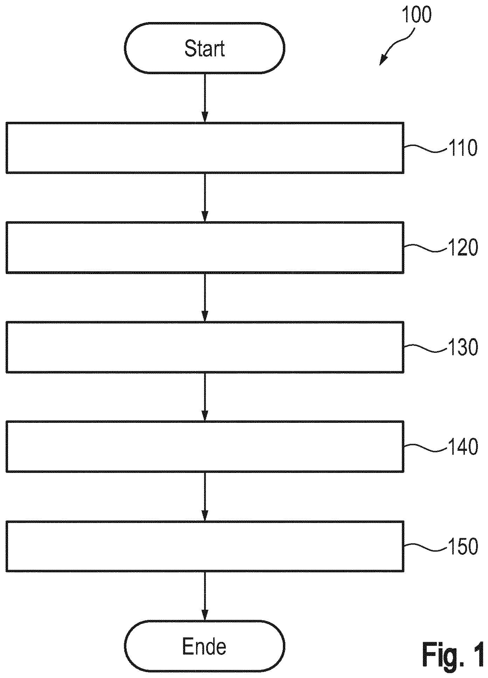

Figur 1 zeigt ein Verfahrensablaufdiagramm 100 von einem Verfahren zur Dynamikdiagnose eines Sensors im Frischluft- oder Abgastrakt von Brennkraftmaschinen. In einem ersten Verfahrensschritt 110 wird ein Sensor zur Messung eines Drucksignals im Frischluft-oder Abgastrakt einer Brennkraftmaschine eines Fahrzeugs mit einer Steuer- und Recheneinheit gekoppelt. In einem zweiten Verfahrensschritt 120 werden jeweils wenigstens ein mittels des Sensors erhobener Messwert von sich unterscheidenden Frequenzbereichen an die Steuer- und Recheneinheit übertragen. In einem dritten Verfahrensschritt 130 wird eine Kennzahl unter Verwendung der Messwerte von sich unterscheidenden Frequenzbereichen berechnet. In einem vierten Verfahrensschritt 140 wird die berechnete Kennzahl mit einem benutzerdefiniert hinterlegten Schwellenwert in der Steuer- und Recheneinheit abgeglichen. In einem fünften Verfahrensschritt 150 wird, wenn die berechnete Kennzahl von dem Schwellenwert abweicht, wenigstens ein Auslösesignal ausgelöst, sodass eine beeinträchtigte Sensordynamik des Sensors angezeigt wird.

Statt der diskreten Ordnungen könnte auch der Frequenzbereich, wie für eine Anwendung einer FFT-Methodik üblich, genutzt werden. Optional kann bei der Berechnung ein Normierungsschritt vollzogen werden. Es kann alternativ jedes Verfahren genutzt werden, mit welchem die spektrale Leistungsdichte erhalten wird. Es können auch andere spektrale Komponenten der charakteristischen Sensor-Leistungsdichte genutzt werden. Die Schwelle zur Erkennung eines Sensors, welcher nicht in Ordnung ist, kann andere Abhängigkeiten aufweisen. Bei einem Verbrennungsmotor beziehungsweise einer Brennkraftmaschine ändert sich je nach Motordrehzahl der relevante Frequenzbereich. Demnach werden die Ordnungen als vielfache der Grundfrequenz (Motordrehzahl) genutzt. Die Amplitude hat sich als tauglichste spektrale Komponente für die nötigen Anforderungen ergeben.

Das vorgestellte Verfahren kann auch als Diagnose der Sensordynamik durch Berechnung der Rauschleistung bezeichnet werden.

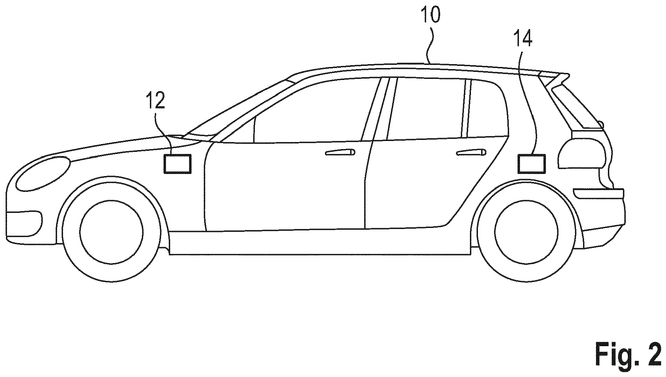

Figur 2 zeigt eine schematische Darstellung von einem Fahrzeug umfassend ein Computerprogramm gemäß Anspruch 11 und ein Computerprogrammprodukt gemäß Anspruch 12.

Es ist vorstellbar, dass das dargestellte Fahrzeug entweder das Computerprogramm gemäß Anspruch 11 oder das Computerprogrammprodukt gemäß Anspruch 12 umfasst.

### Bezugszeichenliste

- 10: Fahrzeug
- 12: Computerprogramm
- 14: Computerprogrammprodukt

- 100: Verfahrensablaufdiagramm
- 110: erster Verfahrensschritt
- 120: zweiter Verfahrensschritt
- 130: dritter Verfahrensschritt
- 140: vierter Verfahrensschritt
- 150: fünfter Verfahrensschritt

## Patentansprüche

1. Verfahren zur Dynamikdiagnose eines Sensors im Frischluft- oder Abgastrakt von Brennkraftmaschinen, welches die folgenden Schritte umfasst:
• Koppeln eines Sensors zur Messung eines Drucksignals im Frischluft-oder Abgastrakt einer Brennkraftmaschine eines Fahrzeugs (10) mit einer Steuer- und Recheneinheit;
• Übertragen von jeweils wenigstens einem mittels des Sensors erhobenen Messwert von sich unterscheidenden Frequenzbereichen an die Steuer- und Recheneinheit,
• Berechnen einer Kennzahl unter Verwendung der Messwerte von sich unterscheidenden Frequenzbereichen;
• Abgleichen der berechneten Kennzahl mit einem benutzerdefiniert hinterlegten Schwellenwert in der Steuer- und Recheneinheit;
• Auslösen wenigstens eines Auslösesignals, wenn die berechnete Kennzahl von dem Schwellenwert abweicht, sodass eine beeinträchtigte Sensordynamik des Sensors angezeigt wird
**dadurch gekennzeichnet, dass**
bei der Berechnung der Kennzahl Messwerte im Messintervall zwischen 800 bis 6.000 Hertz aufsummiert und anschließend mit wenigstens einem Messwert im Messintervall zwischen 50 bis 300 Hertz normiert werden, wobei
sich die Messwerte von sich unterscheidenden Frequenzbereichen jeweils wenigstens um den Faktor fünf unterscheiden.

2. Verfahren nach Anspruch 1, wobei das wenigstens eine Auslösesignal insbesondere dann ausgelöst wird, wenn die berechnete Kennzahl kleiner als der Schwellenwert ist.

3. Verfahren nach einem der vorherigen Ansprüche, wobei die jeweiligen Messwerte über einen Zeitintervall von 2 bis 300 ms oder 15 bis 280 ms oder 30 bis 240 ms oder während mindestens einer f Motordrehung oder maximal zehn Motordrehungen erhoben werden.

4. Verfahren nach einem der vorherigen Ansprüche, wobei der Sensor ausgelegt ist, Messwerte im Bereich von 10 bis 6.000 Hertz zu erheben.

5. Verfahren nach einem der vorherigen Ansprüche, wobei die jeweiligen Messwerte vor der Berechnung der Kennzahl mittels einer FFT-Methodik in den Frequenzraum transformiert werden.

6. Verfahren nach einem der vorherigen Ansprüche, wobei die jeweiligen Messwerte vor der Berechnung der Kennzahl mittels einer FFT-Methodik, insbesondere mittels einer Goertzel-Methodik, in den Frequenzraum transformiert werden.

7. Verfahren nach einem der vorherigen Ansprüche, wobei der Sensor ausgelegt ist, in einem Nockenwellen-Adaptionsverfahren eingesetzt zu werden.

8. Verfahren nach einem der vorherigen Ansprüche, wobei die Steuer- und Recheneinheit ausgelegt ist, zumindest teilweise Aufgaben einer Motorsteuerung auszuführen oder wobei die Steuer- und Recheneinheit mit einer Motorsteuerung des Fahrzeugs gekoppelt wird.

9. Verfahren nach einem der vorherigen Ansprüche, wobei das Auslösesignal für weitere Berechnungs- und/oder Steuerungsvorgänge im Fahrzeug (10) verwendet wird.

10. Verfahren nach einem der vorherigen Ansprüche, wobei das Auslösesignal in wenigstens einer Ausgabevorrichtung des Fahrzeugs (10) angezeigt wird, insbesondere auf wenigstens einer Bildschirmvorrichtung des Fahrzeugs (10).

11. Computerprogramm (12), welches alle Schritte eines Verfahrens nach einem der Ansprüche 1 bis 10 ausführt, wenn das Computerprogramm auf einer Steuer- und Recheneinheit einer Brennkraftmaschine eines Fahrzeugs (10) abläuft und der Sensor zur Messung des Drucksignals im Frischluft- oder Abgastrakt einer Brennkraftmaschine mit der Steuer- und Recheneinheit gekoppelt ist.

12. Computerprogrammprodukt (14) mit Programmcode, der auf einem maschinenlesbaren Träger gespeichert ist, zur Durchführung des Verfahrens nach einem der Ansprüche 1 bis 10, wenn das Programm auf einem Computer und/oder einem Steuergerät ausgeführt wird und der Sensor zur Messung des Drucksignals im Frischluft- oder Abgastrakt einer Brennkraftmaschine mit dem Computer und/oder dem Steuergerät gekoppelt ist.

13. Fahrzeug (10) umfassend ein Computerprogramm (12) gemäß Anspruch 11 und/oder ein Computerprogrammprodukt (14) gemäß Anspruch 12.

## Claims

1. Method for diagnosing the dynamics of a sensor in the fresh air tract or exhaust gas tract of internal combustion engines, which comprises the following steps:
• coupling a sensor for measuring a pressure signal in the fresh air tract or exhaust gas tract of an internal combustion engine of a vehicle (10) having a control and computing unit;
• transmitting in each case at least one measured value collected by means of the sensor from different frequency ranges to the control and computing unit,
• calculating a characteristic using the measured values from different frequency ranges;
• matching the calculated characteristic with a threshold value stored in a user-defined manner in the control and computing unit; and
• triggering at least one trigger signal when the calculated characteristic deviates from the threshold value so that impaired sensor dynamics of the sensor are displayed,
**characterized in that**
when the characteristic is calculated, measured values in the measurement interval of between 800 to 6,000 Hertz are added up and subsequently standardized with at least one measured value in the measurement interval of between 50 and 300 Hertz,
the measured values from different frequency ranges each differing at least by a factor of five.

2. Method according to claim 1, wherein the at least one trigger signal is triggered in particular if the calculated characteristic is less than the threshold value.

3. Method according to either of the preceding claims, wherein each of the measured values are collected over a time interval of 2 to 300 ms or 15 to 280 ms or 30 to 240 ms or during at least one engine revolution or at most ten engine revolutions.

4. Method according to any of the preceding claims, wherein the sensor is designed to collect measured values in the range from 10 to 6,000 Hertz.

5. Method according to any of the preceding claims, wherein each of the measured values are transformed into the frequency domain by means of an FFT methodology prior to calculating the characteristic.

6. Method according to any of the preceding claims, wherein each of the measured values are transformed into the frequency domain by means of an FFT methodology, in particular by means of a Goertzel methodology, prior to calculating the characteristic.

7. Method according to any of the preceding claims, wherein the sensor is designed to be used in a cam shaft adaptation method.

8. Method according to any of the preceding claims, wherein the control and computing unit is designed to at least partially execute tasks of an engine controller, or wherein the control and computing unit is coupled to an engine controller of the vehicle.

9. Method according to any of the preceding claims, wherein the trigger signal is used for further calculation and/or control processes in the vehicle (10).

10. Method according to any of the preceding claims, wherein the trigger signal is displayed in at least one output device of the vehicle (10), in particular on at least one screen device of the vehicle (10).

11. Computer program (12) which executes all the steps of a method according to any of claims 1 to 10 when the computer program runs on a control and computing unit of an internal combustion engine of a vehicle (10) and the sensor for measuring the pressure signal in the fresh air tract or exhaust gas tract of an internal combustion engine is coupled to the control and computing unit.

12. Computer program product (14) comprising program code, which is stored on a machine-readable carrier, for performing the method according to any of claims 1 to 10 when the program is executed on a computer and/or a control apparatus and the sensor for measuring the pressure signal in the fresh air tract or exhaust gas tract of an internal combustion engine is coupled to the computer and/or the control apparatus.

13. Vehicle (10) comprising a computer program (12) according to claim 11 and/or a computer program product (14) according to claim 12.

## Revendications

1. Procédé permettant le diagnostic dynamique d'un capteur dans le circuit d'air frais ou de gaz d'échappement d'un moteur à combustion interne, lequel procédé comprend les étapes suivantes :
• couplage d'un capteur permettant de mesurer un signal de pression dans le circuit d'air frais ou de gaz d'échappement d'un moteur à combustion interne d'un véhicule (10) à une unité de commande et de calcul ;
• transmission à l'unité de commande et de calcul de respectivement au moins une valeur de mesure de plages de fréquences différentes relevée au moyen du capteur,
• calcul d'un indice à l'aide des valeurs de mesure de plages de fréquences différentes ;
• comparaison de l'indice calculé avec une valeur seuil enregistrée définie par l'utilisateur dans l'unité de commande et de calcul ;
• déclenchement d'au moins un signal de déclenchement lorsque l'indice calculé s'écarte de la valeur seuil, de sorte qu'une dynamique de capteur altérée du capteur est affichée
**caractérisé en ce que**
lors du calcul de l'indice, des valeurs de mesure dans l'intervalle de mesure compris entre 800 et 6 000 hertz sont additionnées et ensuite normalisées avec au moins une valeur de mesure dans l'intervalle de mesure compris entre 50 et 300 hertz, dans lequel
les valeurs de mesure de plages de fréquences différentes diffèrent de respectivement au moins un facteur de cinq.

2. Procédé selon la revendication 1, dans lequel l'au moins un signal de déclenchement est déclenché en particulier lorsque l'indice calculé est inférieur à la valeur seuil.

3. Procédé selon l'une quelconque des revendications précédentes, dans lequel les valeurs de mesure respectives sont relevées sur un intervalle de temps de 2 à 300 ms ou de 15 à 280 ms ou de 30 à 240 ms ou pendant au moins une rotation de moteur f ou au maximum dix rotations de moteur.

4. Procédé selon l'une quelconque des revendications précédentes, dans lequel le capteur est configuré pour relever des valeurs de mesure dans la plage de 10 à 6 000 hertz.

5. Procédé selon l'une quelconque des revendications précédentes, dans lequel les valeurs de mesure respectives sont transformées dans l'espace de fréquence au moyen d'une méthodologie de FFT (transformée de Fourier rapide) avant le calcul de l'indice.

6. Procédé selon l'une quelconque des revendications précédentes, dans lequel les valeurs de mesure respectives sont transformées dans l'espace de fréquence au moyen d'une méthodologie de FFT, en particulier au moyen d'une méthodologie de Goertzel, avant le calcul de l'indice.

7. Procédé selon l'une quelconque des revendications précédentes, dans lequel le capteur est conçu pour être utilisé dans un procédé d'adaptation d'arbre à cames.

8. Procédé selon l'une quelconque des revendications précédentes, dans lequel l'unité de commande et de calcul est configurée pour mettre en oeuvre au moins partiellement des tâches d'une commande de moteur ou dans lequel l'unité de commande et de calcul est couplée à une commande de moteur du véhicule.

9. Procédé selon l'une quelconque des revendications précédentes, dans lequel le signal de déclenchement est utilisé pour d'autres processus de calcul et/ou de commande dans le véhicule (10).

10. Procédé selon l'une quelconque des revendications précédentes, dans lequel le signal de déclenchement est affiché dans au moins un dispositif de sortie du véhicule (10), en particulier sur au moins un dispositif formant écran du véhicule (10).

11. Programme informatique (12), lequel met en oeuvre toutes les étapes d'un procédé selon l'une des revendications 1 à 10 lorsque le programme informatique est exécuté sur une unité de commande et de calcul d'un moteur à combustion interne d'un véhicule (10) et le capteur permettant de mesurer le signal de pression dans le circuit d'air frais ou de gaz d'échappement d'un moteur à combustion interne est couplé à l'unité de commande et de calcul.

12. Produit programme informatique (14) comportant un code de programme mémorisé sur un support lisible par machine pour la réalisation du procédé selon l'une des revendications 1 à 10 lorsque le programme est mis en oeuvre sur un ordinateur et/ou un appareil de commande et le capteur permettant de mesurer le signal de pression dans le circuit d'air frais ou de gaz d'échappement d'un moteur à combustion interne est couplé à l'ordinateur et/ou à l'appareil de commande.

13. Véhicule (10) comprenant un programme informatique (12) selon la revendication 11 et/ou un produit programme informatique (14) selon la revendication 12.
